# EUROPEAN PATENT SPECIFICATION

(11) **EP 2 770 402 B1**
(45) Date of publication and mention of the grant of the patent: **02.05.2018**
(21) Application number: 14156596.0
(22) Date of filing: 25.02.2014
(51) Int. Cl.: G06T 1/20, G06F 9/50, G06F 1/32

(54) **Techniques for low energy computation in graphics processing**
Techniken zur energiearmen Berechnung in der Grafikverarbeitung
Techniques de calcul à faible énergie dans le traitement d'éléments graphiques

(30) Priority: 26.02.2013 US 201313777644
(43) Date of publication of application: 27.08.2014
(73) Proprietor: Intel Corporation, Santa Clara, CA 95054 (US)
(72) Inventor: Surti, Prasoonkumar, Folsom, CA 95630 (US); Piazza, Thomas A., Granite Bay, CA 95746 (US)
(74) Representative: V.O.

(56) References cited:
- JP-A- H08 305 544
- US-A1- 2013 013 825
- US-B1- 7 196 710
- US-B1- 8 095 816

## Description

### BACKGROUND

Graphics processing involves a number of non-trivial challenges, and graphics processing systems have faced particular complications, such as those with respect to managing energy efficiency.

JP H08305544 discloses a method to improve data transfer efficiency to a FIFO connecting to a graphic processor which has a threshold monitor.

### BRIEF DESCRIPTION OF THE DRAWINGS

Figure 1 is a block diagram of a graphics processing system configured in accordance with an embodiment of the present invention.
Figure 2 is a flow diagram illustrating a method of using a latency first-in/first-out (FIFO) to modally enable and disable a datapath compute block in a graphics pipeline, in accordance with an embodiment of the present invention.
Figure 3 is a multi-stage diagram illustrating latency FIFO at various stages as it gathers and integrates over several arbitrary clock cycles, in accordance with an embodiment of the present invention.
Figure 4 is a state diagram illustrating the transitions of a latency FIFO and datapath compute, in accordance with an embodiment of the present invention.
Figure 5 illustrates an example system that may carry out the techniques for reducing energy consumption in graphics processing as described herein, in accordance with some embodiments.
Figure 6 illustrates embodiments of a small form factor device in which the system of Figure 5 may be embodied.

### DETAILED DESCRIPTION

Techniques and architecture are disclosed for using a latency first-in/first-out (FIFO) to modally enable and disable a compute block in a graphics pipeline. In some embodiments, for example, the latency FIFO may collect valid accesses for computation by a downstream compute while integrating invalid inputs (e.g., bubbles). While the latency FIFO gathers valid accesses, the compute may be placed in a sleep state or otherwise temporarily disabled. Once a sufficient number of valid accesses are stored in the latency FIFO, the compute may be taken out of sleep mode or otherwise enabled, and the latency FIFO may drain the valid inputs thereto. In some instances, this burst of valid inputs may help to prevent or reduce any underutilization of the compute which otherwise might occur, thus providing power savings for a graphics pipeline or otherwise improving the energy efficiency of a given graphics processing system, in some embodiments. In some instances, throughput demand at the input of the latency FIFO is maintained over a time window corresponding to the on and off time of the compute block. Numerous configurations and variations will be apparent in light of this disclosure.

### General Overview

As previously indicated, there are a number of non-trivial issues that can arise which can complicate graphics processing. For example, the majority of power consumption in graphics processing generally occurs during the computation stages (also referred to herein as computes or compute blocks) of the graphics pipeline. During any given clock cycle within the graphics pipeline, a given compute may be without a valid input (e.g., may receive a stall in the pipeline, known as a bubble). Normally, when a given compute has no valid input for a given clock cycle, the clock signal for that compute is gated by a power compiler or other synthesis tool. This disables (e.g., turns off) that computation stage for the duration of such clock cycle. Typically, the clock signal is gated on a per-stage basis. As will be appreciated in light of this disclosure, the latency of turning the power on and off for a given computation stage on a per-stage basis detracts from any improvements in energy efficiency which otherwise might be realized utilizing this approach.

Thus, and in accordance with an embodiment of the present invention, techniques and architecture are disclosed for implementing a latency first-in/first-out (FIFO) memory to aid in selectively utilizing a given compute block in a graphics pipeline. In some cases, a latency FIFO can be used to integrate would-be periods of low or otherwise less than 100% utilization of the compute block (hereinafter generally referred to as periods of underutilization), and thus provide a longer time window in which to modally enable and disable the compute block of a graphics pipeline. That is, the compute block can be enabled and disabled over a window derived from the granularity of hundreds of clocks rather than merely with the per-clock granularity provided by the per-stage clock signal gating previously discussed.

Some embodiments may realize power savings for a given computation block (e.g., reductions in clock power and/or leakage power associated with the compute block) without increasing the amount of time spent in a given frame. Improvements in energy efficiency (e.g., increased performance per watt) for a given compute block in a graphics pipeline, and thus for a graphics processing microarchitecture or graphics processing system implementing such pipeline, may be realized in some instances. Some embodiments may provide for low-power computation without adversely affecting the average throughput or the rate of compute demand of a given computation block in a graphics pipeline.

The disclosed techniques and architecture may be used in any of a wide range of graphics processing architectures and electronic devices which are capable of graphics processing (e.g., which include a graphics processing unit, or GPU). Some example such devices include mobile phones, portable media players (PMPs), tablets, notebook computers (e.g., laptops), subnotebook computers (e.g., such as an Ultrabook, mini-notebook, or other ultraportable device), and/or any other mobile or battery-operated electronic device, as will be apparent in light of this disclosure. Some embodiments may be utilized, for example, in low-power electronic devices and related applications. However, it should be noted that the claimed invention is not so limited, and the disclosed techniques can be implemented in any of a wide variety of other contexts and applications, as will be apparent in light of this disclosure.

Use of the disclosed techniques and architecture may be detected, for example, by analyzing the power profile or by thermal imaging of a given device which implements known workloads which typically result in periods of low utilization. Other suitable detection techniques will be apparent in light of this disclosure.

### System Architecture

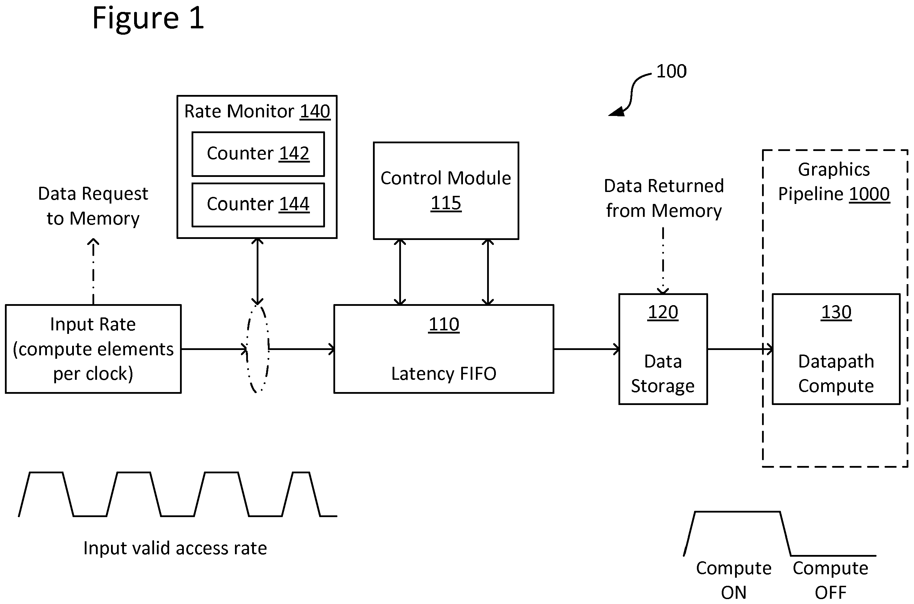

Figure 1 is a block diagram of a graphics processing system 100 configured in accordance with an embodiment of the present invention. As can be seen, system 100 includes a latency first-in/first-out (FIFO) 110, in some cases having a control module 115 communicatively coupled therewith and configured to provide one or more control signals thereto. Data storage 120 is communicatively coupled, for example, with an output of latency FIFO 110, and a datapath compute 130 of a graphics pipeline 1000 is communicatively coupled with an output of data storage 120. In some embodiments, a rate monitor 140 optionally can be communicatively coupled with an input of latency FIFO 110. It should be noted that system 100 may include additional, fewer, and/or different elements or components from those here described, in other embodiments, and the claimed invention is not intended to be limited to the example configuration depicted. Numerous configurations will be apparent in light of this disclosure.

In system 100, data is requested from a memory, which may be provided at the input of latency FIFO 110. For in-order processing, these pending data accesses are stored in latency FIFO 110. After a given latency period, the requested data are returned to data storage 120. As will be apparent in light of this disclosure, the length of this latency period can depend, for example, on the particular memory hierarchy implemented.

For general purposes of illustration within the example context of Figure 1, if system 100 were to have, for instance, an input rate of one compute element per clock cycle, then a fully pipelined datapath compute 130 would be considered to be at peak utilization (e.g., fully utilized at 100%). However, if the input rate were to fall below the peak rate, then the datapath compute 130 would be at less-than-peak utilization. As previously discussed, this underutilization of the datapath compute 130 detracts from the overall energy efficiency realized for system 100 and thus for any device implementing system 100.

As previously noted, and in accordance with an embodiment, latency FIFO 110 can be utilized to integrate the input data rate for a downstream datapath compute 130. To that end, latency FIFO 110 may be configured to integrate clock cycles during which no valid data access is present (e.g., in effect, latency FIFO 110 can collapse bubbles in the input data rate). In turn, this allows for modally enabling and disabling datapath compute 130. In some instances, and in accordance with an embodiment, this may contribute to preventing or otherwise reducing periods of underutilization of datapath compute 130.

In some example instances, datapath compute 130 can be enabled and disabled on the granularity of hundreds of clocks rather than only on per-clock granularity, as previously noted. In some such cases, the resultant time window may be several hundreds of times the latency which otherwise would be available with only per-clock granularity. In one example instance, about 1×10⁴-5×10⁴ clocks or greater of latency may be achieved. It should be noted, however, that the claimed invention is not so limited, and greater or lesser latency levels can be achieved using the disclosed techniques and architecture, as desired for a given target application or end-use.

In accordance with an embodiment, latency FIFO 110 can be configured to collect valid accesses made at its input while integrating invalid inputs (e.g., bubbles). Thereafter, the valid inputs can be drained from latency FIFO 110 for downstream use, as discussed below. As will be appreciated in light of this disclosure, it may be desirable to ensure that the latency FIFO 110 is sufficiently deep to prevent or otherwise minimize overflow; for instance, in one example embodiment, latency FIFO 110 can be configured to cover a few hundred clock cycles. In some embodiments, latency FIFO 110 can be configured such that if a steady stream of data is arriving at its input, then it provides a steady output (e.g., every few clocks or as frequently as otherwise desired). If instead a sufficiently low stream of data is arriving at the input of latency FIFO 110, then it may store or otherwise hold that data without providing an output. Other suitable configurations and capabilities of latency FIFO 110 will depend on a given application and will be apparent in light of this disclosure.

In accordance with an embodiment, control module 115 communicates to latency FIFO 110 one or more control signals which control its collection and drain functions. Thus, control module 115 can be used to control the integrating capabilities of latency FIFO 110, and thus can aid in exploiting the energy saving opportunities previously noted. In some cases, control module 115 can be used to set or otherwise designate the drain threshold of latency FIFO 110 which, in some such instances, can be a user-programmable quantity corresponding to the number of valid inputs collected by latency FIFO 110. Other suitable configurations and capabilities of control module 115 (when included) will depend on a given application and will be apparent in light of this disclosure.

Within a given graphics pipeline, there may be computation elements or other instructions for which it is undesirable to increase the latency. For example, if a render target (RT) read is present, then increasing the latency thereof, such as by delaying the pop of the latency FIFO 110, may undesirably hinder graphics processing performance. To address this issue, a rate monitor 140 optionally may be implemented, for example, at the input of latency FIFO 110 to aid in achieving the desired integration of the input rate, in some embodiments. Optional input monitor 140 can be configured to comprehend the FIFO entry width and the number of clocks that the FIFO entry width represents for utilization of datapath compute 130. To that end, in one example embodiment, input monitor 140 includes a first counter 142 which counts a value 'TOTAL_CLOCK_COUNTER' which corresponds with the total number of clock cycles, and a second counter 144 which tracks a value 'VALID_CLOCK_COUNTER' which corresponds with the number of clock cycles having valid inputs for datapath compute 130. It should be noted that the claimed invention is not so limited, and other suitable configurations for optional rate monitor 140 will depend on a given application and will be apparent in light of this disclosure.

### Methodology

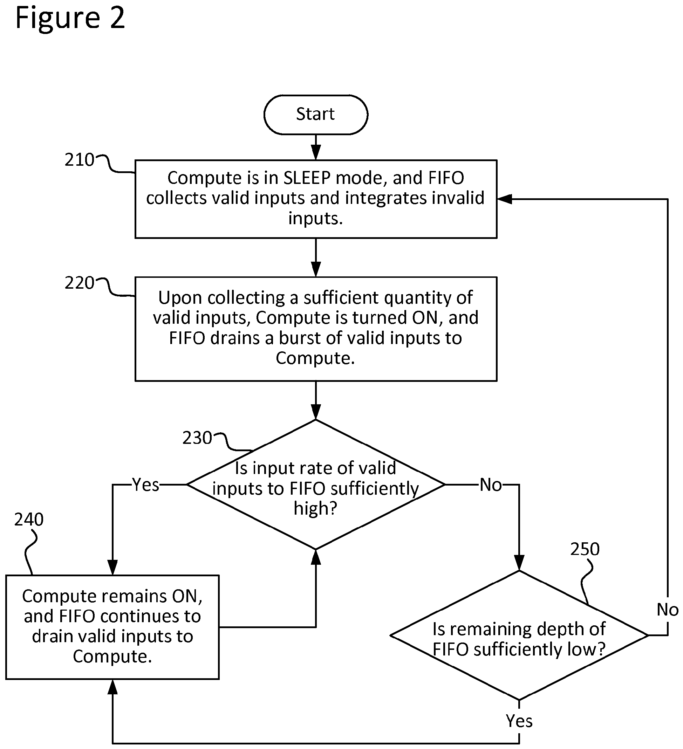

Figure 2 is a flow diagram illustrating a method of using a latency FIFO 110 to modally enable and disable a datapath compute block 130 in a graphics pipeline 1000, in accordance with an embodiment of the present invention. In some cases, the techniques described in the context of Figure 2 can be utilized, for example, in system 100 of Figure 1. Other suitable contexts for use of the disclosed techniques will be apparent in light of this disclosure.

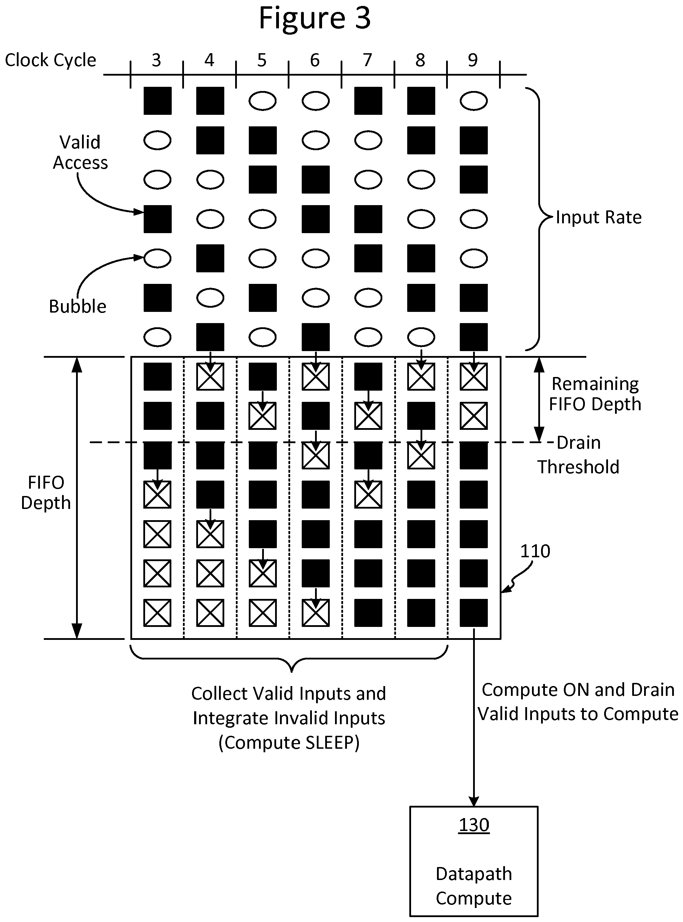

The flow may begin as in block 210 with the latency FIFO 110 collecting valid inputs and integrating invalid inputs. During this time, the computation block 130 remains in a SLEEP mode or is otherwise temporarily disabled. Figure 3 is a multi-stage diagram illustrating latency FIFO 110 at various stages as it gathers and integrates over several arbitrary clock cycles, in accordance with an embodiment of the present invention. As can be seen, latency FIFO 110 gathers valid inputs which are bound for downstream datapath compute 130. These valid accesses are denoted in the figure by darkly shaded boxes. Meanwhile, latency FIFO 110 integrates invalid inputs which otherwise might lead to periods of underutilization of datapath compute 130. These bubbles are denoted in the figure by non-shaded ellipses. The latency FIFO 110 continues to collect valid inputs until a triggering point is reached or otherwise surpassed, which is denoted in the figure as Drain Threshold. As previously noted, the Drain Threshold can be a user-programmable threshold, in some embodiments.

In one example embodiment, the Drain Threshold for triggering the draining of latency FIFO 110 corresponds to the condition when: (i) the number of clock cycles having valid inputs (that is, VALID_CLOCK_COUNTER) reaches a designated threshold quantity for turning on datapath compute 130; and (ii) when the difference between the total number of clock cycles and the number of clock cycles having valid inputs reaches a designated threshold quantity for turning off datapath compute 130 (that is, when OFF_TIME = TOTAL_CLOCK_COUNTER - ON_TIME). The value 'OFF_TIME' represents the number of clocks for which computation block 130 is put to SLEEP. The value 'TOTAL_CLOCK_COUNTER' is incremented for every clock and gets reset when latency FIFO 110 begins draining. The value 'ON_TIME' can be computed using the number of valid entries in the latency FIFO and represents the number of clocks that computation block 130 is clocked and powered (e.g., kept active). Other suitable thresholds and considerations for triggering draining of latency FIFO 110 will depend on a given application and will be apparent in light of this disclosure.

As previously noted, while latency FIFO 110 is gathering valid inputs, datapath compute block 130 is placed in a SLEEP mode or is otherwise temporarily disabled, for example, by gating the clock signal thereto. The longer that it takes to reach or surpass the Drain Threshold-that is, the longer that it takes to accumulate the threshold quantity of valid inputs, which depends in part on the number of invalid inputs being integrated by latency FIFO 110-the longer that datapath compute block 130 remains in its state of lowest power consumption (e.g., SLEEP or otherwise disabled). In accordance with an embodiment, this improves the energy savings which may be realized. Thus, as will be appreciated in light of this disclosure, it may be desirable to maximize OFF_TIME while minimally or otherwise negligibly affecting throughput and the rate of compute demand. In some instances, datapath compute 130 may be disabled for a sufficiently large number of clock cycles so as to allow for: (i) greater tolerance of the in and out latency of the clock signal; and/or (ii) power gating at a coarser level than might be otherwise achieved, for example, using a power compiler or other synthesis tool. In turn, this can aid in minimizing or otherwise reducing the dynamic capacitance (C_{Dyn}) being switched per clock cycle, which consequently reduces switching power costs and leakage current, which consequently reduces leakage power costs.

Returning to Figure 2, once the number of valid inputs gathered by the latency FIFO 110 reaches or otherwise surpasses the Drain Threshold, the flow may proceed as in block 220 with draining the latency FIFO 110. Triggering of draining of latency FIFO 110 can be performed, for example, upon receipt of an appropriate instruction signal from control module 115. In any case, when latency FIFO 110 has sufficient valid data available for computation, it outputs its stored valid inputs to downstream datapath compute 130 which then may make computational progress. In some example embodiments, latency FIFO 110 is drained by an amount equal to the value of VALID_CLOCK_COUNTER (e.g., as determined at the time that draining is triggered). In some instances, and in accordance with an embodiment, the valid accesses are delivered as a burst of valid inputs to downstream datapath compute 130.

When the draining of latency FIFO 110 is triggered, datapath compute 130 is turned ON or otherwise taken out of SLEEP mode or other disabled state, for example, by un-gating the clock signal thereto. In some instances, and in accordance with an embodiment, the aforementioned burst of valid inputs provided by latency FIFO 110 allows datapath compute 130 to work at peak utilization (e.g., at or about 100% or other rate, as desired for a given target application or end-use). Once draining of latency FIFO 110 is triggered, both total clock counter 142 and valid clock counter 144 are reset and once again begin tracking their respective values as latency FIFO 110 once again begins collecting valid inputs. When latency FIFO 110 is drained (e.g., by an amount equal to the value of VALID_CLOCK_COUNTER), it checks for 'OFF_TIME_THRESHOLD,' the value of which represents the minimum number of clocks implementation benefits by putting compute 130 to SLEEP or otherwise in a disabled state.

In some cases, latency FIFO 110 is drained to the point when the previous ON_TIME = 0. The ON_TIME is transferred to DRAIN_COUNTER when latency FIFO 110 starts to drain so that ON_TIME can track a new 'TIME_WINDOW,' the value of which represents the window of time over which invalid inputs (e.g., bubbles) are accumulated without affecting throughput. The throughput over this window is represented by the ratio of ON_TIME/TIME_WINDOW. In some cases, integration of invalid inputs/bubbles occurs within the latency FIFO 110 such that throughput demand, for example, at the input of the latency FIFO 110 is maintained over a time window equal to ON_TIME + OFF_TIME. The value 'DRAIN_COUNTER' is decremented every clock cycle that datapath compute 130 is activated while draining latency FIFO 110.

Thereafter, the flow may continue as in block 230 with determining whether the input data rate to the latency FIFO 110 is sufficiently high. If the input rate of valid inputs to latency FIFO 110 continues to be sufficiently high, such as in the case where OFF_TIME is tracking sufficiently low with a sufficiently high ON_TIME (e.g., when compute demand is high and thus datapath compute 130 cannot go into SLEEP mode as it is required to perform computations and thus must remain ON for a longer period of time), then the flow may continue as in block 240 with maintaining the datapath compute 130 in an ON state and continuing to drain valid inputs from latency FIFO 110 thereto. In some such instances, this allows for datapath compute block 130 to continue to work at peak utilization (e.g., at or about 100% or other rate, as desired for a given target application or end-use). Thus, in some such cases, the next opportunity for the datapath compute 130 to go to sleep may be, for example, when there is a sufficiently sharp decline in the input rate such that the quantity of valid accesses stored in latency FIFO 110 falls below the Drain Threshold, as previously discussed.

If instead the input rate of valid inputs to latency FIFO 110 is not sufficiently high, then the flow may continue as in block 250 with determining whether the remaining depth of latency FIFO 110 is sufficiently low. The value 'REMAINING_FIFO_DEPTH' corresponds to the difference between the total depth of latency FIFO 110 and the number of valid entries currently stored in latency FIFO 110 (e.g., if latency FIFO 110 can store 40 valid accesses, and 30 valid accesses are currently stored at a given instant, then the remaining FIFO depth is 10 valid accesses deep before overflow occurs). It should be noted that the value 'TREND_FIFO_DEPTH' (discussed below) is not used in this case, for example, to be conservative (e.g., assuming, for instance, that the remaining entries in the latency FIFO 110 may be filled with all single-clock compute demands). The value of REMAINING_FIFO_DEPTH (and of TREND_FIFO_DEPTH, when applicable) may allow for predicting estimated ON and OFF times for compute 130, which can be used, for example, with a programmable threshold to control the collecting and draining of latency FIFO 110. This programmable threshold may be programmed, for example, into control module 115, in some embodiments.

If the remaining FIFO depth is sufficiently low (e.g., if there is a sufficiently high quantity of valid entries stored in latency FIFO 110 and thus little remaining FIFO depth for additional valid entries before overflow occurs), then the process may continue as in block 240 with maintaining datapath compute 130 in an enabled state and draining valid entries from latency FIFO 110 thereto for computation. If instead the remaining FIFO depth is sufficiently high (e.g., if the quantity of valid entries stored in latency FIFO 110 is sufficiently low and thus there is sufficient remaining FIFO depth for additional valid entries without risk of overflow), then the process may continue as in block 210 with placing compute 130 in SLEEP mode and continuing to collect valid inputs and to integrate bubbles using latency FIFO 110.

Numerous variations on this methodology will be apparent in light of this disclosure. As will be appreciated, and in accordance with one or more embodiments, each of the functional boxes (e.g., 210, 220, and 240) and decision points (e.g., 230 and 250) shown in Figure 2 can be implemented, for example, as a module or sub-module that, when executed by one or more processors or otherwise operated, causes the associated functionality as described herein to be carried out. The modules/sub-modules may be implemented, for instance, in software (e.g., executable instructions stored on one or more computer readable media), firmware (e.g., embedded routines of a microcontroller or other device which may have I/O capacity for soliciting input from a user and providing responses to user requests), and/or hardware (e.g., gate level logic, field programmable gate array, or purpose-built silicon).

As will be appreciated in light of this disclosure, situations may arise in which a given compute entry requires more than a single clock cycle of computation for complete processing. Thus, and in accordance with another embodiment of the present invention, latency FIFO 110 can be used, for example, as a Trend_FIFO configured to do continuous integration of invalid inputs as a sliding window capable of sliding across the frame time. In some instances, this Trend_FIFO can have a tunable depth (e.g., which can be tuned to be proportional to the depth of latency FIFO 110, in some cases) and can be configured to gather the inter-arrival rate of access for each valid input and to start draining to datapath compute 130 once it is completely full. In some cases, the total time required for computation is equivalent to the sum of all the numbers in the Trend_FIFO, which can be determined, for instance, by incrementing on pop of the FIFO by the number of clocks for which compute 130 will be utilized and decrementing by the value stored in the FIFO for that entry. If each valid entry in latency FIFO 110 represents a variable number of clocks of compute utilization, then the Trend_FIFO can be used as described above. The Trend_FIFO holds a number per every valid entry in latency FIFO 110, and that number is the number of clocks that compute 130 is required for that entry.

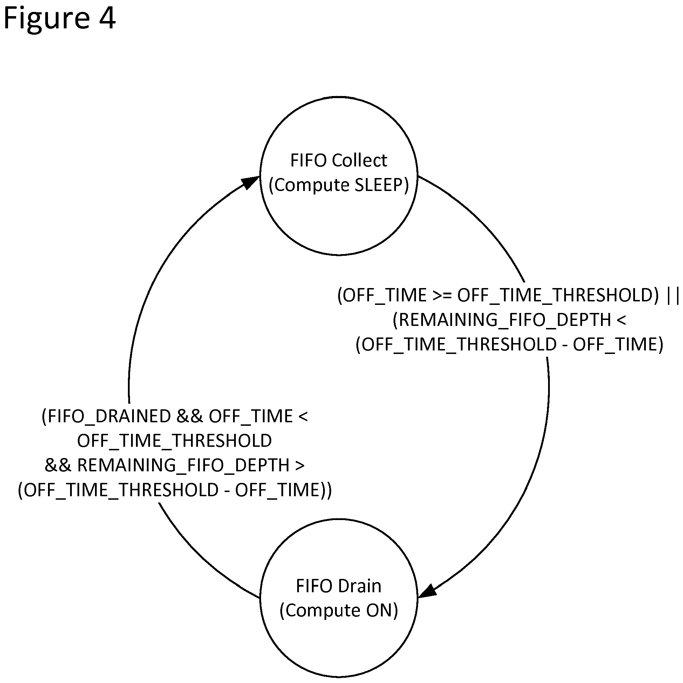

Figure 4 is a state diagram illustrating the transitions of a latency FIFO 110 and datapath compute 130, in accordance with an embodiment of the present invention. As can be seen, if latency FIFO 110 is drained, and OFF_TIME is less than OFF_TIME_THRESHOLD, and REMAINING_FIFO_DEPTH is greater than the difference between OFF_TIME_THRESHOLD and OFF_TIME, then latency FIFO 110 switches from draining mode to collecting mode, while datapath compute 130 switches from its ON state to a SLEEP state. As previously discussed, the longer the period of time in which compute 130 remains in its SLEEP state (e.g., its state of lowest power consumption), the greater the energy savings that may be realized, in accordance with an embodiment. However, if OFF_TIME is greater than or equal to OFF_TIME_THRESHOLD or if REMAINING_FIFO_DEPTH is less than the difference between OFF_TIME_THRESHOLD and OFF_TIME, then latency FIFO 110 switches from collecting mode to draining mode, while datapath compute 130 switches from a SLEEP state to its ON state. During this period of time, compute 130 works on the burst of valid accesses provided latency FIFO 110 at peak utilization (e.g., at or about 100% or other rate, as desired for a given target application or end-use). As will be appreciated, if the noted conditions for switching from one state to the other are not met, then latency FIFO 110 and datapath compute 130 will remain in their current states without switching states until such conditions are met.

As previously noted, and in accordance with one or more embodiments, the disclosed techniques can be used to provide datapath compute 130 of graphics pipeline 1000 with a given degree of modality of use, as desired for a given application or end-use. By selectively turning on datapath compute 130 and utilizing it at its peak rate and then subsequently shutting it off for a period of time while a sufficient number of valid inputs are gathered by latency FIFO 110, datapath compute 130 can be allowed to operate at an optimal or other desired computation rate. In some instances, this may prevent or otherwise minimize underutilization of datapath compute 130. As previously discussed, and in accordance with one or more embodiments, this can provide for improved energy efficiency (e.g., reduced switching power losses and/or leakage power losses) in a given graphics system.

Furthermore, it should be noted that while the disclosed techniques are generally discussed in the example context of a datapath computation block (e.g., datapath compute 130) in a graphics pipeline (e.g., graphics pipeline 1000), the claimed invention is not so limited. For example, within a given graphics system, there are typically several compute blocks which may be utilized over a given frame time (that is, the time for rendering a given frame), and the disclosed techniques may be implemented, in accordance with one or more embodiments, with any or all compute blocks in a given graphics pipeline or graphics system, as desired for a given target application or end-use.

### Example Implementation

In accordance with an embodiment of the present invention, the disclosed techniques and architecture can be implemented, in one example case, with color blending hardware. In some instances, a given color blending hardware may be fed with data provided by a render color cache (RCC), and the RCC allocation and blend hardware may be separated, for example, by a latency FIFO (e.g., much like latency FIFO 110, discussed above). As will be appreciated in light of this disclosure, the input rate into such latency FIFO may be determined by any of a wide variety of factors, such as primitive sizes, single instruction multiple data (SIMD), pixel grouping, multi-sample anti-aliasing (MSAA), pixel shader (PS) length, and number of outputs from the pixel shader (PS). In some instances, if the input rate is not at its peak rate (e.g., which otherwise normally would lead to underutilization of the blend hardware), the latency FIFO may be operated using the techniques described herein to integrate the input rate to provide peak utilization (e.g., at or about 100% or other utilization rate, as desired for a given target application or end-use), in accordance with one or more embodiments. In some cases, the disclosed techniques can be used, for example, to provide for optimally turning off the blend hardware.

It should be noted, however, that the claimed invention is not so limited, as the disclosed techniques and architecture may be used in any of a wide range of target applications or end-uses. For instance, some embodiments can be used in other contexts, such as depth buffer tests or texture sampling hardware. Other graphics processing architectures and systems which can implement the disclosed techniques and architecture will be apparent in light of this disclosure.

### Example System

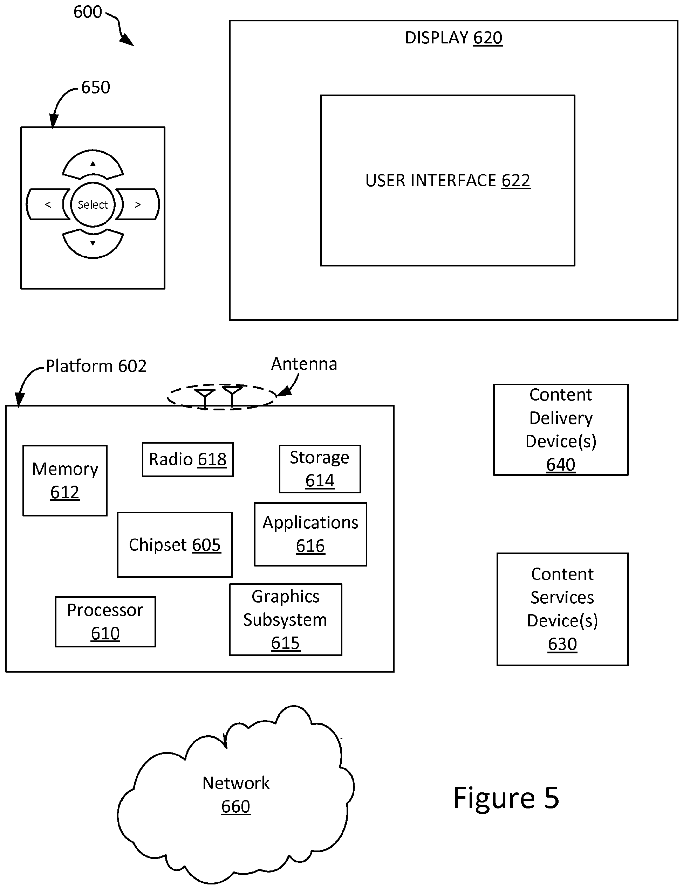

Figure 5 illustrates an example system 600 that may carry out the techniques for reducing energy consumption in graphics processing as described herein, in accordance with some embodiments. In some embodiments, system 600 may be a media system, although system 600 is not limited to this context. For example, system 600 may be incorporated into a personal computer (PC), laptop computer, ultra-laptop computer, tablet, touch pad, portable computer, handheld computer, palmtop computer, personal digital assistant (PDA), cellular telephone, combination cellular telephone/PDA, television, smart device (e.g., smart phone, smart tablet or smart television), mobile internet device (MID), messaging device, data communication device, set-top box, game console, or other such computing environments capable of performing graphics rendering operations.

In some embodiments, system 600 comprises a platform 602 coupled to a display 620. Platform 602 may receive content from a content device such as content services device(s) 630 or content delivery device(s) 640 or other similar content sources. A navigation controller 650 comprising one or more navigation features may be used to interact, for example, with platform 602 and/or display 620. Each of these example components is described in more detail below.

In some embodiments, platform 602 may comprise any combination of a chipset 605, processor 610, memory 612, storage 614, graphics subsystem 615, applications 616, and/or radio 618. Chipset 605 may provide intercommunication among processor 610, memory 612, storage 614, graphics subsystem 615, applications 616, and/or radio 618. For example, chipset 605 may include a storage adapter (not depicted) capable of providing intercommunication with storage 614.

Processor 610 may be implemented, for example, as Complex Instruction Set Computer (CISC) or Reduced Instruction Set Computer (RISC) processors, x86 instruction set compatible processors, multi-core, or any other microprocessor or central processing unit (CPU). In some embodiments, processor 610 may comprise dual-core processor(s), dual-core mobile processor(s), and so forth. Memory 612 may be implemented, for instance, as a volatile memory device such as, but not limited to, a Random Access Memory (RAM), Dynamic Random Access Memory (DRAM), or Static RAM (SRAM). Storage 614 may be implemented, for example, as a nonvolatile storage device such as, but not limited to, a magnetic disk drive, optical disk drive, tape drive, an internal storage device, an attached storage device, flash memory, battery backed-up SDRAM (synchronous DRAM), and/or a network accessible storage device. In some embodiments, storage 614 may comprise technology to increase the storage performance enhanced protection for valuable digital media when multiple hard drives are included, for example.

Graphics subsystem 615 may perform processing of images such as still or video for display. Graphics subsystem 615 may be a graphics processing unit (GPU) or a visual processing unit (VPU), for example. An analog or digital interface may be used to communicatively couple graphics subsystem 615 and display 620. For example, the interface may be any of a High-Definition Multimedia Interface (HDMI), DisplayPort, wireless HDMI, and/or wireless HD compliant techniques. Graphics subsystem 615 could be integrated into processor 610 or chipset 605. Graphics subsystem 615 could be a stand-alone card communicatively coupled to chipset 605. The techniques for reducing energy consumption in graphics processing described herein may be implemented in various hardware architectures. For example, the techniques for reducing energy consumption in graphics processing as provided herein may be integrated within a graphics and/or video chipset. Alternatively, a discrete security processor may be used. In still another embodiment, the graphics and/or video functions including the techniques for reducing energy consumption in graphics processing may be implemented by a general purpose processor, including a multi-core processor.

Radio 618 may include one or more radios capable of transmitting and receiving signals using various suitable wireless communications techniques. Such techniques may involve communications across one or more wireless networks. Exemplary wireless networks may include, but are not limited to, wireless local area networks (WLANs), wireless personal area networks (WPANs), wireless metropolitan area network (WMANs), cellular networks, and satellite networks. In communicating across such networks, radio 618 may operate in accordance with one or more applicable standards in any version.

In some embodiments, display 620 may comprise any television or computer-type monitor or display. Display 620 may comprise, for example, a liquid crystal display (LCD) screen, electrophoretic display (EPD) or liquid paper display, flat panel display, touch screen display, television-like device, and/or a television. Display 620 may be digital and/or analog. In some embodiments, display 620 may be a holographic or three-dimensional display. Also, display 620 may be a transparent surface that may receive a visual projection. Such projections may convey various forms of information, images, and/or objects. For example, such projections may be a visual overlay for a mobile augmented reality (MAR) application. Under the control of one or more software applications 616, platform 602 may display a user interface 622 on display 620.

In some embodiments, content services device(s) 630 may be hosted by any national, international, and/or independent service and thus may be accessible to platform 602 via the Internet or other network, for example. Content services device(s) 630 may be coupled to platform 602 and/or to display 620. Platform 602 and/or content services device(s) 630 may be coupled to a network 660 to communicate (e.g., send and/or receive) media information to and from network 660. Content delivery device(s) 640 also may be coupled to platform 602 and/or to display 620. In some embodiments, content services device(s) 630 may comprise a cable television box, personal computer (PC), network, telephone, Internet-enabled devices or appliance capable of delivering digital information and/or content, and any other similar device capable of unidirectionally or bi-directionally communicating content between content providers and platform 602 and/or display 620, via network 660 or directly. It will be appreciated that the content may be communicated unidirectionally and/or bi-directionally to and from any one of the components in system 600 and a content provider via network 660. Examples of content may include any media information including, for example, video, music, graphics, text, medical and gaming content, and so forth.

Content services device(s) 630 receives content such as cable television programming including media information, digital information, and/or other content. Examples of content providers may include any cable or satellite television or radio or Internet content providers. The provided examples are not meant to limit the claimed invention. In some embodiments, platform 602 may receive control signals from navigation controller 650 having one or more navigation features. The navigation features of controller 650 may be used to interact with user interface 622, for example. In some embodiments, navigation controller 650 may be a pointing device that may be a computer hardware component (specifically human interface device) that allows a user to input spatial (e.g., continuous and multi-dimensional) data into a computer. Many systems such as graphical user interfaces (GUI) and televisions and monitors allow the user to control and provide data to the computer or television using physical gestures.

Movements of the navigation features of controller 650 may be echoed on a display (e.g., display 620) by movements of a pointer, cursor, focus ring, or other visual indicators displayed on the display. For example, under the control of software applications 716, the navigation features located on navigation controller 650 may be mapped to virtual navigation features displayed on user interface 622, for example. In some embodiments, controller 650 may not be a separate component but integrated into platform 602 and/or display 620. Embodiments, however, are not limited to the elements or in the context shown or described herein, as will be appreciated.

In some embodiments, drivers (not shown) may comprise technology to enable users to instantly turn on and off platform 602 like a television with the touch of a button after initial boot-up, when enabled, for example. Program logic may allow platform 602 to stream content to media adaptors or other content services device(s) 630 or content delivery device(s) 640 when the platform is turned "off." In addition, chip set 605 may comprise hardware and/or software support for 5.1 surround sound audio and/or high definition 7.1 surround sound audio, for example. Drivers may include a graphics driver for integrated graphics platforms. In some embodiments, the graphics driver may comprise a peripheral component interconnect (PCI) express graphics card.

In various embodiments, any one or more of the components shown in system 600 may be integrated. For example, platform 602 and content services device(s) 630 may be integrated, or platform 602 and content delivery device(s) 640 may be integrated, or platform 602, content services device(s) 630, and content delivery device(s) 640 may be integrated, for example. In various embodiments, platform 602 and display 620 may be an integrated unit. Display 620 and content service device(s) 630 may be integrated, or display 620 and content delivery device(s) 640 may be integrated, for example. These examples are not meant to limit the claimed invention.

In various embodiments, system 600 may be implemented as a wireless system, a wired system, or a combination of both. When implemented as a wireless system, system 600 may include components and interfaces suitable for communicating over a wireless shared media, such as one or more antennas, transmitters, receivers, transceivers, amplifiers, filters, control logic, and so forth. An example of wireless shared media may include portions of a wireless spectrum, such as the RF spectrum and so forth. When implemented as a wired system, system 600 may include components and interfaces suitable for communicating over wired communications media, such as input/output (I/O) adapters, physical connectors to connect the I/O adapter with a corresponding wired communications medium, a network interface card (NIC), disc controller, video controller, audio controller, and so forth. Examples of wired communications media may include a wire, cable, metal leads, printed circuit board (PCB), backplane, switch fabric, semiconductor material, twisted-pair wire, co-axial cable, fiber optics, and so forth.

Platform 602 may establish one or more logical or physical channels to communicate information. The information may include media information and control information. Media information may refer to any data representing content meant for a user. Examples of content may include, for example, data from a voice conversation, videoconference, streaming video, email or text messages, voice mail message, alphanumeric symbols, graphics, image, video, text and so forth. Control information may refer to any data representing commands, instructions, or control words meant for an automated system. For example, control information may be used to route media information through a system or instruct a node to process the media information in a predetermined manner (e.g., using the techniques for reducing energy consumption in graphics processing as described herein). The embodiments, however, are not limited to the elements or context shown or described in Figure 5.

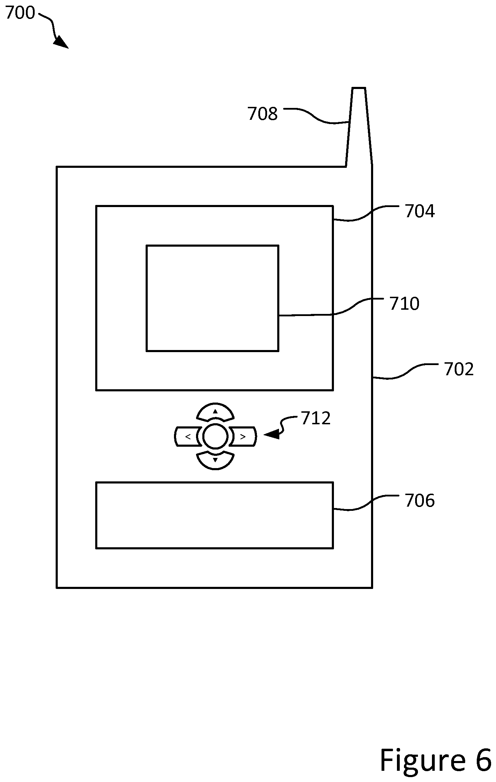

As described above, system 600 may be embodied in varying physical styles or form factors. Figure 6 illustrates embodiments of a small form factor device 700 in which system 600 may be embodied. In some embodiments, for example, device 700 may be implemented as a mobile computing device having wireless capabilities. A mobile computing device may refer to any device having a processing system and a mobile power source or supply, such as one or more batteries, for example.

As previously described, examples of a mobile computing device may include a personal computer (PC), laptop computer, ultra-laptop computer, tablet, touch pad, portable computer, handheld computer, palmtop computer, personal digital assistant (PDA), cellular telephone, combination cellular telephone/PDA, television, smart device (e.g., smart phone, smart tablet or smart television), mobile internet device (MID), messaging device, data communication device, and so forth.

Examples of a mobile computing device also may include computers that are arranged to be worn by a person, such as a wrist computer, finger computer, ring computer, eyeglass computer, belt-clip computer, arm-band computer, shoe computers, clothing computers, and other wearable computers. In some embodiments, for example, a mobile computing device may be implemented as a smart phone capable of executing computer applications, as well as voice communications and/or data communications. Although some embodiments may be described with a mobile computing device implemented as a smart phone by way of example, it may be appreciated that other embodiments may be implemented using other wireless mobile computing devices as well. The embodiments are not limited in this context.

As shown in Figure 6, device 700 may comprise a housing 702, a display 704, an input/output (I/O) device 706, and an antenna 708. Device 700 also may comprise navigation features 712. Display 704 may comprise any suitable display unit for displaying information appropriate for a mobile computing device. I/O device 706 may comprise any suitable I/O device for entering information into a mobile computing device. Examples for I/O device 706 may include an alphanumeric keyboard, a numeric keypad, a touch pad, input keys, buttons, switches, rocker switches, microphones, speakers, voice recognition device and software, and so forth. Information also may be entered into device 700 by way of microphone. Such information may be digitized by a voice recognition device. The embodiments are not limited in this context.

Various embodiments may be implemented using hardware elements, software elements, or a combination of both. Examples of hardware elements may include processors, microprocessors, circuits, circuit elements (e.g., transistors, resistors, capacitors, inductors, and so forth), integrated circuits (IC), application specific integrated circuits (ASIC), programmable logic devices (PLD), digital signal processors (DSP), field programmable gate array (FPGA), logic gates, registers, semiconductor device, chips, microchips, chip sets, and so forth. Examples of software may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Whether hardware elements and/or software elements are used may vary from one embodiment to the next in accordance with any number of factors, such as desired computational rate, power levels, heat tolerances, processing cycle budget, input data rates, output data rates, memory resources, data bus speeds, and other design or performance constraints.

Some embodiments may be implemented, for example, using a machine-readable medium or article which may store an instruction or a set of instructions that, if executed by a machine, may cause the machine to perform a method and/or operations in accordance with an embodiment of the present invention. Such a machine may include, for example, any suitable processing platform, computing platform, computing device, processing device, computing system, processing system, computer, processor, or the like, and may be implemented using any suitable combination of hardware and software. The machine-readable medium or article may include, for example, any suitable type of memory unit, memory device, memory article, memory medium, storage device, storage article, storage medium and/or storage unit, for example, memory, removable or non-removable media, erasable or non-erasable media, writeable or rewriteable media, digital or analog media, hard disk, floppy disk, Compact Disk Read Only Memory (CD-ROM), Compact Disk Recordable (CD-R), Compact Disk Rewriteable (CD-RW), optical disk, magnetic media, magneto-optical media, removable memory cards or disks, various types of Digital Versatile Disk (DVD), a tape, a cassette, or the like. The instructions may include any suitable type of executable code implemented using any suitable high-level, low-level, object-oriented, visual, compiled, and/or interpreted programming language.

Unless specifically stated otherwise, it may be appreciated that terms such as "processing," "computing," "calculating," "determining," or the like, refer to the action and/or processes of a computer or computing system, or similar electronic computing device, that manipulates and/or transforms data represented as physical quantities (e.g., electronic) within the computing system's registers and/or memories into other data similarly represented as physical quantities within the computing system's memories, registers, or other such information storage, transmission, or displays. The embodiments are not limited in this context.

Numerous embodiments will be apparent in light of this disclosure. One example embodiment of the present invention provides a graphics processing microarchitecture including a graphics pipeline including: a computation block; and a latency first-in/first-out (FIFO) communicatively coupled with an input of the computation block, wherein the latency FIFO collects valid inputs and integrates invalid inputs received thereby and drains collected valid inputs to the computation block upon collecting a quantity of valid inputs which reaches or surpasses a drain threshold quantity. In some cases, the computation block comprises a datapath compute. In some instances, at least one invalid input comprises a pipeline stall or bubble. In some example cases, the latency FIFO integrates invalid inputs such that throughput demand at an input of the latency FIFO is maintained over a time window. In some such cases, the time window is determined by summing a number of clocks for which the computation block is in an on state and a number of clocks for which the computation block is in an off state. In some cases, the drain threshold quantity of valid inputs is user-programmable. In some instances, the graphics processing microarchitecture further includes a control module communicatively coupled with the latency FIFO and configured to control the collecting and draining of valid inputs by the latency FIFO. In some cases, the graphics processing microarchitecture further includes a rate monitor communicatively coupled with an input of the latency FIFO, the rate monitor including: a first counter which counts a total number of clock cycles; and a second counter which tracks a number of clock cycles where the latency FIFO collects a valid input. In some example cases, the graphics pipeline is part of a graphics processing unit (GPU). In some example cases, the graphics pipeline is part of at least one of a color blending hardware, a depth buffer test, and/or a texture sampling hardware. In some instances, a portable computing device including the graphics processing microarchitecture is provided. In some such instances, the portable computing device comprises at least one of a mobile phone, a portable media player, a tablet, a laptop computer, a notebook computer, and/or a subnotebook computer.

Another example embodiment of the present invention provides a computer-readable medium encoded with instructions that, when executed by one or more processors, causes a process for modally enabling and disabling a computation block of a graphics pipeline to be carried out, the process including: collecting valid inputs and integrating invalid inputs received by a first-in/first-out (FIFO) that is communicatively coupled with the computation block; and upon collecting a quantity of valid inputs which reaches or surpasses a drain threshold quantity, switching the computation block from a sleep state to an on state and draining a burst of collected valid inputs from the FIFO to the computation block. In some cases, if the quantity of valid inputs collected by the FIFO remains above the drain threshold quantity, the process further includes maintaining the computation block in its on state and continuing to drain collected valid inputs from the FIFO to the computation block. In some instances, if the quantity of valid inputs collected by the FIFO is not maintained above the drain threshold quantity, the process further includes: switching the computation block from its on state to its sleep state; and stopping draining of the FIFO and continuing to collect valid inputs and integrating invalid inputs with the FIFO. In some cases, the drain threshold quantity of valid inputs is user-programmable. In some instances, the FIFO comprises a latency FIFO. In some such instances, the latency FIFO integrates invalid inputs such that throughput demand at an input of the latency FIFO is maintained over a time window. In some such cases, the time window is determined by summing a number of clocks for which the computation block is in an on state and a number of clocks for which the computation block is in an off state. In some other instances, the FIFO comprises a trend FIFO configured to perform continuous integration of invalid inputs as a sliding window across a frame time. In some such instances, the trend FIFO has a tunable depth. In some other such instances, the trend FIFO drains collected valid inputs to the computation block once it is completely full of valid inputs.

Another example embodiment of the present invention provides a graphics processing system including: a graphics pipeline including a datapath computation block; a latency first-in/first-out (FIFO) communicatively coupled with an input of the datapath computation block, wherein the latency FIFO is configured to collect valid inputs and integrate invalid inputs received thereby and to drain collected valid inputs to the datapath computation block upon collecting a quantity of valid inputs which reaches or surpasses a drain threshold quantity; a control module communicatively coupled with the latency FIFO and configured to control the collecting and draining of the latency FIFO; and a rate monitor communicatively coupled with the latency FIFO and configured to monitor an input data rate received thereat. In some cases, the control module is further configured to set the drain threshold quantity. In some instances, the latency FIFO integrates invalid inputs such that throughput demand at an input of the latency FIFO is maintained over a time window which is determined by summing a number of clocks for which the computation block is in an on state and a number of clocks for which the computation block is in an off state.

The foregoing description of the embodiments of the invention has been presented for the purposes of illustration and description. It is not intended to be exhaustive or to limit the invention to the precise form disclosed. Many modifications and variations are possible in light of this disclosure. It is intended that the scope of the invention be limited not by this detailed description, but rather by the claims appended hereto.

## Claims

1. A graphics processing system comprising:
a graphics pipeline (1000) including a computation block (130); and
a latency first-in/first-out (FIFO) processing buffer (110) wherein pending data accesses are stored and in order-returned after a latency period communicatively coupled with an input of the computation block (130), **characterized in that** the latency FIFO (110) is arranged to collect valid inputs and to integrate invalid inputs, such that throughput demand at an input of the latency FIFO (110) is maintained over a time window, at least one of the invalid inputs comprising a pipeline stall or bubble, and to drain collected valid inputs to the computation block (130) upon collecting a quantity of valid inputs which reaches or surpasses a drain threshold quantity to thereby switch the computation block (130) from a sleep state to an on state.

2. The graphics processing system of claim 1, wherein the computation block (130) comprises a datapath compute.

3. The graphics processing system of claim 2, wherein the time window is determined by summing a number of clocks for which the computation block (130) is in an on state and a number of clocks for which the computation block (130) is in an off state.

4. The graphics processing system of claim 1 further comprising a control module communicatively coupled with the latency FIFO (110) and configured to control the collecting and draining of valid inputs by the latency FIFO (110).

5. The graphics processing system of claim 1 further comprising a rate monitor communicatively coupled with an input of the latency FIFO (110), the rate monitor comprising:
a first counter which counts a total number of clock cycles; and
a second counter which tracks a number of clock cycles where the latency FIFO (110) collects a valid input.

6. The graphics processing system of claim 1, wherein the graphics pipeline (1000) is part of a graphics processing unit (GPU).

7. The graphics processing system of claim 1, wherein the graphics pipeline (1000) is part of at least one of a color blending hardware, a depth buffer test, and/or a texture sampling hardware.

8. A portable computing device comprising the graphics processing system of any of claims 1 through 7.

9. A method for modally enabling and disabling a computation block (130) of a graphics pipeline (1000) to be carried out, the process comprising
collecting valid inputs and integrating invalid inputs, at least one of the invalid inputs comprising a pipeline stall or bubble, received by a first-in/first-out (FIFO) processing buffer (110) wherein pending data accesses are stored and in order-returned after a latency period that is communicatively coupled with the computation block (130); wherein the latency FIFO (110) integrates invalid inputs, to maintain throughput demand at an input of the latency FIFO (110) over a time window and
upon collecting a quantity of valid inputs which reaches or surpasses a drain threshold quantity, switching the computation block (130) from a sleep state to an on state and draining a burst of collected valid inputs from the FIFO (110) to the computation block (130).

10. The method of claim 9, wherein:
if the quantity of valid inputs collected by the FIFO (110) remains above the drain threshold quantity, the process further comprises:
maintaining the computation block (130) in its on state and
continuing to drain collected valid inputs from the FIFO (110) to the computation block (130); and
if the quantity of valid inputs collected by the FIFO (110) is not maintained above the drain threshold quantity, the process further comprises: switching the computation block (130) from its on state to its sleep state; and stopping draining of the FIFO (110) and continuing to collect valid inputs and integrating invalid inputs with the FIFO (110).

11. The method of claim 9, wherein the time window is determined by summing a number of clocks for which the computation block (130) is in an on state and a number of clocks for which the computation block (130) is in an off state.

12. The method of claim 9, wherein the FIFO (110) comprises a trend FIFO configured to perform continuous integration of invalid inputs as a sliding window across a frame time.

13. A computer-readable medium encoded with instructions that, when executed by one or more processors, causes a process to be carried out as claimed in any of claims 9-12.

## Patentansprüche

1. Grafikverarbeitungssystem, umfassend:
eine Grafikpipeline (1000), die einen Berechnungsblock (130) enthält; und
einen FIFO(First-In/First-Out)-Latenz-Verarbeitungspuffer (110), in dem anstehende Datenzugriffe gespeichert und nach einer Latenzzeit in einer Reihenfolge zurückgegeben werden, der kommunikativ mit einem Eingang des Berechnungsblocks (130) gekoppelt ist, **dadurch gekennzeichnet, dass** der FIFO-Latenzpuffer (110) dazu ausgelegt ist, gültige Eingänge zu erfassen und ungültige Eingänge zu integrieren, sodass die Durchsatzanforderung an einem Eingang des FIFO-Latenzpuffers (110) über ein Zeitfenster aufrechterhalten wird, wobei mindestens einer der ungültigen Eingänge einen Pipelinehalt oder eine Pipelineblase umfasst, und erfasste gültige Eingänge an den Berechnungsblock (130) abzuleiten, nachdem eine Menge gültiger Eingänge erfasst wurde, die einen Ableitungsschwellenwert erreicht oder übersteigt, um somit den Berechnungsblock (130) von einem Ruhezustand in einen eingeschalteten Zustand umzuschalten.

2. Grafikverarbeitungssystem nach Anspruch 1, wobei der Berechnungsblock (130) eine Datenpfadberechnung umfasst.

3. Grafikverarbeitungssystem nach Anspruch 2, wobei das Zeitfenster durch Summieren einer Anzahl von Takten, bei denen sich der Berechnungsblock (130) in einem eingeschalteten Zustand befindet, und einer Anzahl von Takten, bei denen sich der Berechnungsblock (130) in einem ausgeschalteten Zustand befindet, bestimmt wird.

4. Grafikverarbeitungssystem nach Anspruch 1, ferner umfassend ein Steuermodul, das kommunikativ mit dem FIFO-Latenzpuffer (110) gekoppelt und konfiguriert ist, um das Erfassen und das Ableiten von gültigen Eingängen durch den FIFO-Latenzpuffer (110) zu steuern.

5. Grafikverarbeitungssystem nach Anspruch 1, ferner umfassend einen Ratenmonitor, der kommunikativ mit einem Eingang des FIFO-Latenzpuffers (110) gekoppelt ist, wobei der Ratenmonitor Folgendes umfasst:
einen ersten Zähler, der eine Gesamtanzahl von Taktzyklen zählt; und
einen zweiten Zähler, der eine Anzahl von Taktzyklen verfolgt, bei denen der FIFO-Latenzpuffer (110) einen gültigen Eingang erfasst.

6. Grafikverarbeitungssystem nach Anspruch 1, wobei die Grafikpipeline (1000) Teil eines Grafikprozessors (Graphics Processing Unit, GPU) ist.

7. Grafikverarbeitungssystem nach Anspruch 1, wobei die Grafikpipeline (1000) Teil einer Farbmischhardware, einer Tiefenpuffertest- und/oder einer Texturabtastungshardware ist.

8. Tragbare Computervorrichtung, umfassend das Grafikverarbeitungssystem nach einem der Ansprüche 1 bis 7.

9. Verfahren zum modalen Aktivieren und Deaktivieren eines Berechnungsblocks (130) einer auszuführenden Grafikpipeline (1000), wobei der Prozess umfasst:
Erfassen gültiger Eingänge und Integrieren ungültiger Eingänge, wobei mindestens einer der ungültigen Eingänge einen Pipelinehalt oder eine Pipelineblase umfasst, die von einem FIFO(First-In/First-Out)-Latenz-Verarbeitungspuffer (110), in dem anstehende Datenzugriffe gespeichert und nach einer Latenzzeit in einer Reihenfolge zurückgegeben werden, der kommunikativ mit dem Berechnungsblock (130) gekoppelt ist, empfangen werden; wobei der FIFO-Latenzpuffer (110) ungültige Eingänge integriert, um die Durchsatzanforderung an einem Eingang des FIFO-Latenzpuffers (110) über ein Zeitfenster aufrechtzuerhalten und nach dem Erfassen einer Menge gültiger Eingänge, die einen Ableitungsschwellenwert erreicht oder übersteigt, den Berechnungsblock (130) von einem Ruhezustand in einen eingeschalteten Zustand umschaltet und einen Burst erfasster gültiger Eingänge von dem FIFO-Puffer (110) an den Berechnungsblock (130) ableitet.

10. Verfahren nach Anspruch 9, wobei:
wenn die Menge von gültigen Eingängen, die von dem FIFO-Puffer (110) erfasst werden, über dem Ableitungsschwellenwert bleibt, das Verfahren ferner umfasst:
Beibehalten des Berechnungsblocks (130) in seinem eingeschalteten Zustand und Fortsetzen der Ableitung erfasster gültiger Eingaben von dem FIFO-Puffer (110) an den Berechnungsblock (130); und
wenn die Menge von gültigen Eingängen, die von dem FIFO-Puffer (110) erfasst werden, nicht über dem Ableitungsschwellenwert beibehalten wird, das Verfahren ferner umfasst: Umschalten des Berechnungsblocks (130) von seinem eingeschalteten Zustand in seinen Ruhezustand; und Beenden des Ableitens des FIFO-Puffers (110) und Fortsetzen des Erfassens gültiger Eingänge und des Integrierens ungültiger Eingänge mittels des FIFO-Puffers (110).

11. Verfahren nach Anspruch 9, wobei das Zeitfenster durch Summieren einer Anzahl von Takten, bei denen sich der Berechnungsblock (130) in einem eingeschalteten Zustand befindet, und einer Anzahl von Takten, bei denen sich der Berechnungsblock (130) in einem ausgeschalteten Zustand befindet, bestimmt wird.

12. Verfahren nach Anspruch 9, wobei der FIFO-Puffer (110) einen FIFO-Trendpuffer umfasst, der konfiguriert ist, um eine fortlaufende Integration von ungültigen Eingängen als ein gleitendes Fenster über eine Rahmenzeit hinweg durchzuführen.

13. Computerlesbares Medium, das mit Anweisungen kodiert ist, die bei Ausführung durch einen oder mehrere Prozessoren bewirken, dass ein Prozess wie in einem der Ansprüche 9-12 beansprucht ausgeführt wird.

## Revendications

1. Système de traitement graphique, comprenant :
un pipeline graphique (1000) incluant un bloc de calcul (130) ; et
un tampon de traitement premier entré/premier sortie (FIFO) à latence (110), dans lequel des accès à des données en attente sont stockés et renvoyés en ordre après une période de latence, couplé en communication avec une entrée du bloc de calcul (130), **caractérisé en ce que** le FIFO à latence (110) est agencé pour collecter des entrées valides et pour intégrer des entrées invalides, de telle sorte qu'une demande de débit à une entrée du FIFO à latence (110) soit maintenue au cours d'une fenêtre de temps, au moins l'une des entrées invalides comprenant un arrêt ou une bulle de pipeline, et pour drainer des entrées valides collectées vers le bloc de calcul (130) lors de la collecte d'une quantité d'entrées valides qui atteint ou surpasse une quantité de seuil de drainage pour ainsi commuter le bloc de calcul (130) d'un état de sommeil à un état en fonctionnement.

2. Système de traitement graphique selon la revendication 1, dans lequel le bloc de calcul (130) comprend un calcul de chemin de données.

3. Système de traitement graphique selon la revendication 2, dans lequel la fenêtre de temps est déterminée en sommant un nombre d'horloges pour lesquelles le bloc de calcul (130) est dans un état en fonctionnement et un nombre d'horloges pour lesquelles le bloc de calcul (130) est dans un état hors fonctionnement.

4. Système de traitement graphique selon la revendication 1, comprenant en outre un module de commande couplé en communication avec le FIFO à latence (110) et configuré pour commander la collecte et le drainage d'entrées valides par le FIFO à latence (110).

5. Système de traitement graphique selon la revendication 1, comprenant en outre un appareil de surveillance de taux couplé en communication avec une entrée du FIFO à latence (110), l'appareil de surveillance de taux comprenant :
un premier compteur qui compte un nombre total de cycles d'horloge ; et
un second compteur qui suit un nombre cycles d'horloge où le FIFO à latence (110) collecte une entrée valide.

6. Système de traitement graphique selon la revendication 1, dans lequel le pipeline graphique (1000) fait partie d'une unité de traitement graphique (GPU).

7. Système de traitement graphique selon la revendication 1, dans lequel le pipeline graphique (1000) fait partie d'au moins l'un parmi un matériel de mélange de couleur, un essai de tampon de profondeur, et/ou un matériel d'échantillonnage de texture.

8. Dispositif informatique portatif, comprenant le système de traitement graphique selon l'une quelconque des revendications 1 à 7.

9. Procédé pour activer et désactiver de façon modale un bloc de calcul (130) d'un pipeline graphique (1000) destiné à être réalisé, le processus comprenant
la collecte d'entrées valides et l'intégration d'entrées invalides, au moins l'une des entrées invalides comprenant un arrêt ou une bulle de pipeline, reçu par un tampon de traitement premier entré/premier sortie (FIFO) (110), dans lequel des accès à des données en attente sont stockés et renvoyés en ordre après une période de latence, qui est couplé en communication avec le bloc de calcul (130) ; dans lequel le FIFO à latence (110) intègre des entrées invalides, pour maintenir une demande de débit à une entrée du FIFO à latence (110) au cours d'une fenêtre de temps, et,
lors de la collecte d'une quantité d'entrées valides qui atteint ou surpasse une quantité de seuil de drain, la commutation du bloc de calcul (130) d'un état de sommeil à un état en fonctionnement et le drainage d'une rafale des entrées valides collectées, du FIFO (110) au bloc de calcul (130).

10. Procédé selon la revendication 9, dans lequel :
si la quantité des entrées valides collectées par le FIFO (110) reste supérieure à la quantité de seuil de drain, le processus comprend en outre :
le maintien du bloc de calcul (130) dans son état en fonctionnement et la continuation du drainage des entrées valides collectées, du FIFO (110) au bloc de calcul (130) ; et
si la quantité d'entrées valides collectées par le FIFO (110) n'est pas maintenue au-dessus de la quantité de seuil de drain, le processus comprend en outre : la commutation du bloc de calcul (130) de son état en fonctionnement à son état en sommeil ; et l'arrêt du drainage du FIFO (110) et la continuation de la collecte des entrées valides et l'intégration des entrées invalides avec le FIFO (110).

11. Procédé selon la revendication 9, dans lequel la fenêtre de temps est déterminée en sommant un nombre d'horloges pour lesquelles le bloc de calcul (130) est dans un état en fonctionnement et un nombre d'horloges pour lesquelles le bloc de calcul (130) est dans un état hors fonctionnement.

12. Procédé selon la revendication 9, dans lequel le FIFO (110) comprend un FIFO de tendance configuré pour effectuer une intégration continue des entrées invalides sous forme de fenêtre glissante sur une durée de trame.

13. Support lisible par ordinateur encodé avec des instructions, qui, lorsqu'elles sont exécutées par un ou plusieurs processeurs, fait en sorte qu'un processus soit effectué selon l'une quelconque des revendications 9 à 12.
